# EUROPEAN PATENT SPECIFICATION

(11) **EP 1 715 993 B1**
(45) Date of publication and mention of the grant of the patent: **07.05.2008**
(21) Application number: 05723331.4
(22) Date of filing: 18.02.2005
(51) Int. Cl.: B29C 70/48, B29C 45/14, C04B 35/83, F16D 69/02

(54) **RESIN OR PITCH TRANSFER MOULDING APPARATUS AND METHOD USING THE SAME**
VORRICHTUNG ZUM TRANSFERSPRITZEN VON HARZ- ODER PECH UND VERFAHREN DAMIT
DISPOSITIF DE MOULAGE PAR TRANSFERT DE RÉSINE OU BRAI ET PROCÉDÉ UTILISANT CE DISPOSITIF

(30) Priority: 20.02.2004 US 783548
(43) Date of publication of application: 02.11.2006
(73) Proprietor: Honeywell International Inc., Morristown, New Jersey 07960 (US)
(72) Inventor: LA FOREST, Mark, L., Granger, IN 46530 (US); HOLLOWAY, Roger, W., North Liberty, IN 46554 (US); WAHLERS, Christopher, S., South Bend, IN 46628 (US)
(74) Representative: Hucker, Charlotte Jane
(86) International application number: PCT/US2005/005305
(87) International publication number: WO 2005/082607

(56) References cited:
- EP-A- 1 236 564
- US-B1- 6 537 470

## Description

### FIELD OF THE INVENTION

The present invention relates to resin transfer molding (RTM) systems for the manufacture of carbon-carbon composites. This invention provides a resin or pitch transfer molding apparatus and process that enables a great deal of flexibility in the infiltration of porous carbon preforms with thermoset or thermoplastic resins or with pitch. Embodiments of this invention provide improved throughput rates by utilizing flash cooling of molten resin at the part surface. This invention also reduces the possibility of delaminating parts, provides flexibility in mold flow by using multiple hot runner gates to accommodate various fiber architectures, and improves venting by using both inner and outer diameter vents. Mold cavities provided by this invention may optionally also employ inner and/or outer part locating rings. The present invention thus provides a simple, robust, and versatile process-controlled system.

### BACKGROUND OF THE INVENTION

The patent literature is replete with inventions relating to the production of carbon-carbon composites. For example, US 4,986,943 (The Aerospace Corporation) teaches oxidation of a fiber preform matrix impregnated with petroleum-derived mesophase pitch to fix the matrix in place within the preform so that softening, bloating, and expulsion of the matrix are avoided when the preform body is carbonized. US 5,306,448 (United Technologies Corporation) teaches a process that comprises applying pressure to a pressure yielding porous sponge containing resin to transfer the resin to a porous article precursor. More specifically, the resin reservoir facilitates Resin Transfer Molding by providing a resin reservoir to facilitate the desired impregnation of a porous preform such as a dry fiber composite precursor. US 6,325,608 B1 (North Carolina A&T State University) teaches an apparatus that includes a green part molding station, a carbonization station, and an impregnation station. The impregnation station includes a mold that forms a sealed enclosure configured in the shape of the carbonized part for receiving the carbonized part and a vacuum source for evacuating the mold. At least one resin injection port is in the mold, and a supply of resin is connected to the resin injection port for injection into the mold. US 6,521,152 B1 (Honeywell International Inc.) teaches depositing chopped fibrous materials and binder materials sequentially onto a belt conveyor so that the materials are successively layered in a predetermined ratio and subsequently mixed to achieve uniform dispersion throughout. The mixed materials are then deposited into a rotating mold to further ensure uniform dispersion of fibrous and binder materials. Impregnation of the fibrous materials with the binder material occurs *in situ* as the uniformly mixed materials are heated and subsequently compacted in the mold to obtain the desired shape of the fiber-reinforced composite part. Finally, US 6,537,470 B1 (Honeywell International Inc.) teaches a Resin Transfer Molding process that uses a fibrous preform or rigid porous body which is placed into a moulding apparatus in accordance with the preamble of claim 1 and matching the desired part geometry. A hot resin is injected into the mold. After cooling, the infiltrated component is removed from the mold. A gate fitted with a nozzle admits resin or pitch into the gate area of the mold.

### SUMMARY OF THE INVENTION

This invention provides a rapid resin or pitch transfer molding apparatus as defined in claim 1. In a preferred embodiment, the mold insert is configured to produce a brake disc for an aircraft landing system. The mold constraining means may be those shown, for instance, in US 6,537,470 B1, the entire contents of which patent are herein expressly incorporated by reference. The means for melting and conveying a resin or pitch may be those disclosed in application Serial No. 10/407,472, filed April 4, 2003.

The contribution of the present invention includes the mold and mold insert that are used for infiltrating a fibrous preform matrix located in the molding cavity. The mold insert may include: a top half having an annular groove (87); a bottom half having an annular groove opposed to the top half (85), so that the top half and the bottom half form an annular mold cavity (1, 35); a plurality of melt supply channels (5, 6, 7, 8, 9, 86) disposed in the top half (31, 45) and in the bottom half (32, 40) of the mold, wherein the melt supply channels operatively communicate with the annular mold cavity; valves (13, 36), wherein the valves can admit resin or pitch into the melt supply channels in the top half and the bottom half of the mold; and an arrangement (22, 25, 81) for venting and/or providing a vacuum to the annular mold cavity.

In the Resin Transfer Molding apparatus of this invention, the annular mold cavity may be partially defined by an inner step ring (29) and/or an inner locator ring (84, 89) and/or by an outer step ring (27) and/or an outer locator ring (20, 21). The RTM apparatus may also include a centrally located inner vent port (83) and/or a plurality of annularly located outer vent ports (22, 25).

The molding process of this invention is defined in claim 3 and includes several steps. One such step contemplates arranging a porous preform (11, 18, 57), at a temperature above a melting point of a resin or pitch to be transferred into the preform (e.g., 100-425°C, more preferably 100-310°C), in an annular mold cavity (1, 35) of the apparatus of claim 1. In some cases, a plurality of preforms may be place in the mold together. The annular mold cavity is defined by a top half that includes an annular groove (87) and a bottom half that includes an annular groove opposed to the top half (85), so that the top half and the bottom half form the annular mold cavity. Also, a plurality of melt supply channels (5, 6, 7, 8, 9, 86) is disposed in the top half (31, 40) and in the bottom half (32, 45) of the mold to operatively communicate with the annular mold cavity. Valves (13, 36) operable to admit resin or pitch into the melt supply channels in the top half and the bottom half of the mold are also proved. And, the annular mold cavity is provided with an arrangement (22, 25, 81) for venting and/or providing a vacuum thereto. Subsequently, in accordance with this invention, one may effect flow of the resin or pitch from channels (6, 7, 8, 9, 86) located in the top and bottom of the mold cavity through the preform (11, 18, 57) located in the mold cavity to vents (22, 25, 81) located in the center of, at the top and/or bottom of, and/or annularly around the mold cavity, in order to effect impregnation of the preform. Optionally, a vacuum may be provided to the mold prior to injecting the molten resin or pitch. Finally, the resulting resin-infiltrated or pitch-infiltrated preform will normally be cooled, for instance by a flash cooling system, to below the melting point of the resin or pitch and the impregnated preform will be removed from the mold.

In the RTM process of this invention, the preform may be selected from the group consisting of fibrous preforms, carbon fiber preforms, nonwoven preforms, random fiber preforms with binder, rigidized preforms, and foam preforms. Preferably, the preform is a porous carbon body, most preferably, configured as a brake disc for an aircraft landing system. The resin or pitch used in the RTM process of this invention may be a synthetic pitch, a coal tar pitch, a petroleum pitch, a mesophase pitch, a high char yield thermoset resin, or any combination of such pitches and resins.

This invention also contemplates additional processing steps. For instance, the oxidized impregnated preform may be carbonized, and may be heated to a temperature of 1600-2800°C to graphitize the carbonized impregnated preform. The graphitized preform may be further densified using chemical vapor deposition/chemical vapor infiltration or resin transfer molding.

### BRIEF DESCRIPTION OF THE DRAWINGS

Various objects and features of the present invention will become apparent from the detailed description hereinbelow, considered in conjunction with the accompanying drawings. It is to be understood, however, that the drawings are designed solely for purposes of illustration and not as a definition of the limits of the invention. It should be further understood that the drawings are not necessarily drawn to scale and that, unless otherwise indicated, they are merely intended to conceptually illustrate the structures and procedures described herein.

Figure 1 is a cut away side view of a mold, mold insert, and preform.

Figure 2A is a cut away side view of a quarter of a mold, mold insert, and mold cavity in accordance with this invention. Figure 2B is a top plan view of the quarter of a mold, mold insert, and mold cavity shown in Figure 2A.

Figure 3 shows upper and lower mold halves according to an embodiment of the present invention.

Figure 4 is a cross-section of a mold insert assembly according to an embodiment of the present invention.
Figures 5A and 5B show cross-sections of molds according to different embodiments of the present invention, including schematics of the resin flows around and through the preforms.

### DETAILED DESCRIPTION OF THE INVENTION

The reference numerals appearing in the drawings are listed below, along with indications of their illustrative significance.
- 1, 35: mold cavity
- 2: mold insert
- 3: mold
- 5, 86: resin supply channel
- 6, 7, 8, 9: runner from resin supply channel
- 11, 18, 57: preform
- 13, 36: resin supply gate
- 14: top gate portion
- 15: bottom gate portion
- 16, 37: resin supply gate nozzle
- 17: resin supply gate nozzle shut off rod
- 19: mold chamber
- 20: upper outside diameter locator ring
- 21: lower outside diameter locator ring
- 22: vents
- 25: outside diameter vent
- 27: outer step ring
- 29: inner step ring
- 31: mold bottom half
- 32: mold top half
- 33a, 33b, 33c, 33d: guide pins
- 34a, 34b, 34c, 34d: shim stock
- 40: mold insert bottom half
- 41: runner from resin supply channel
- 43: runner from resin supply channel
- 45: mold insert top half
- 49: runner from resin supply channel
- 81: inside diameter vent
- 83: central vent port
- 84: lower inside diameter locator ring
- 85: lower mold cavity
- 87: upper mold cavity
- 88: pressure indicator
- 89: upper inside diameter locator ring

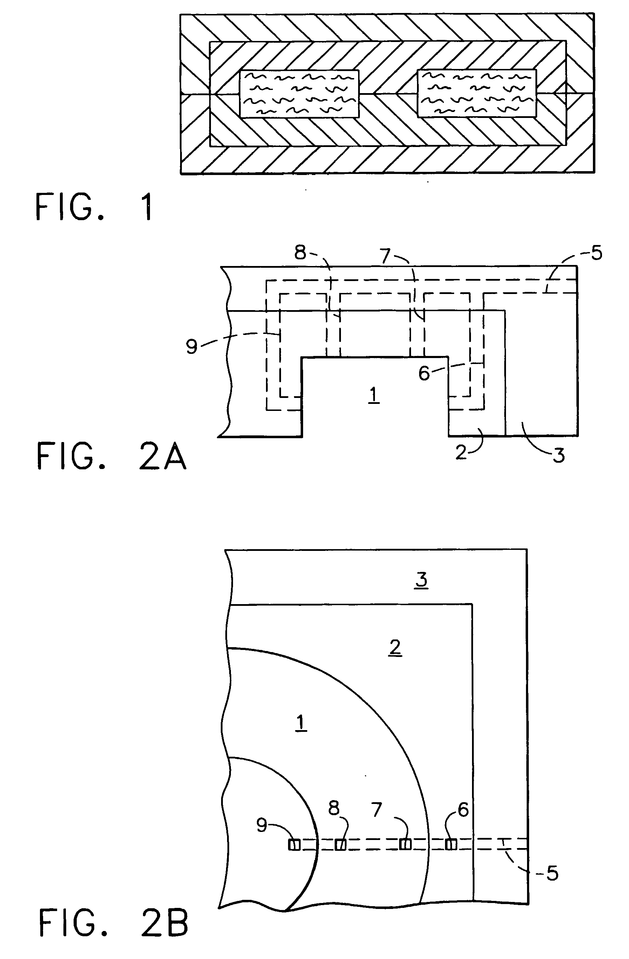

This invention provides a mold having a mold insert, which mold insert defines an internal cavity that is used in the manufacture of a preform. The mold and mold insert generally comprise top and bottom halves. These features are illustrated in Figure 1. In accordance with the present invention, resin or pitch is fed through runners into the internal cavity. This is illustrated in Figures 2A and 2B. Mold cavity 1 is defined be mold insert 2. Resin/pitch channel 5, located in mold 3, branches off into runners 6, 7, 8, and 9. These runners in mold 3 are continued in mold insert 2. Runner 6 delivers resin/pitch through the outside surface of a preform located in cavity 1. Runners 7 and 8 deliver resin/pitch through the top surface of a preform located in cavity 1. Runner 9 delivers resin/pitch through the inside surface of a preform located in cavity 1. Figure 2, of course, simply illustrates the principle, which is delivery of resin or pitch from multiple locations situated at various places near the surface of a preform being melt infiltrated.

The present invention thus contemplates both a material handling system and a mold. Together, these components of the present invention allow for great versatility in infiltrating porous preforms, such as for flat annular carbon brake disks. Full details of the material handling system are described in U.S. patent application Serial No. 10/407,472. The mold in this invention is both top and bottom fed, for example through gear pumps and/or piston-type melt accumulators or piston pumps. The gear pumps can be used to infiltrate preforms simultaneously, or they can be used with a delay. For instance, the bottom resin feed line can be activated and then shut off, at which time the top resin feed line can be activated. This approach is especially valuable when the preform being infiltrated would be adversely affected by having two melt streams converge and create turbulence within its fiber structure. Likewise, in some applications, it may be desirable to complete the infiltration operation using only the top resin feed line or only the bottom resin feed line. Alternatively, the melt accumulators or piston pumps can be used to fill preforms simultaneously, individually, or by delay. The gear pumps and the melt accumulators/piston pumps can be used in any combination to effect infiltration.

Pressure relief valves are used to eliminate pressure spikes during the infiltration process. This decreases the chance of damage to the preforms during the infiltration process. Gasses and moisture are removed through melt blender venting and/or holding tank venting to eliminate possible moisture or volatiles from entering the mold during infiltration. This also decreases the venting demands in the mold itself. Pitch and resin melting is conducted under a nitrogen blanket to maintain resin quality. That is, a blanket of nitrogen (or another inert gas) keeps moisture and oxygen away from the melted resin or pitch being supplied in the RTM process. The nitrogen blanket may be provided for instance by supplying pressurized nitrogen into the melt blender tank.

In accordance with this invention, the mold and mold insert tooling optionally vent through their outside walls and through their inside walls simultaneously. The mold insert tooling preferably has protrusions or steps, both top and bottom and both inner and outer, to allow for gradient pressure over the top and bottom web of the preform. The mold insert tooling also preferably has inner and/or outer preform locating rings to position the preform for infiltration. This lessens the possibility that preforms will be damaged during the pressurized infiltration process. Also, extended top and bottom ejector pins serve as platforms during infiltration, to prevent flexing or damage to the preforms being treated. These molds can be used with vacuum but vacuum is not required.

Preform webs located in the mold cavity can be filled through the top of the web, filled through the bottom of the web, top and bottom filled simultaneously through the web, or top and bottom filled with one side being delayed. Also, the webs can be side-filled, for instance from their inside diameter to their outside diameter. As those skilled in the art will appreciate, virtually any combination of fill directions can be used, depending upon the nature of the fibrous web and/or the viscosity and flow rate of the melt, in order to achieve the desired impregnation of the fibrous preform matrix. In accordance with this invention, flash cooling (air, water, mist, etc.) improves cycle times or production rates and allows for hotter mold operating temperatures, lower infiltration pressures, and even longer fill rates when desired.

A process that makes use of the present invention may be illustrated with respect to the process disclosed in application Serial No. 10/407,472. As taught therein, raw material, such as AR mesophase pitch resin, is melted in a melt blender apparatus, and then loaded into a holding tank. The melted pitch or resin may be kept under a nitrogen blanket to forestall oxidative cross-linking. Gasses and moisture may be removed from the system through a melt blender vent port and/or a holding tank vent port to eliminate possible moisture or volatiles from entering the mold during infiltration. This approach eliminates the necessity for drying the resin prior to use. Feed lines receive resin from the holding tank and feed an upper and a lower gear pump. Static mixers located in the feed lines ensure a homogeneous melt temperature by adding mechanical work to the resin, breaking up resin flow patterns, and improving the mixing of additives such as friction modifiers, resin stabilizers, and anti-oxidants in the resin material. The resin-melt feed lines may also be equipped with pressure indicators and pressure relief valves to eliminate pressure spikes during the infiltration process. This lessens the possibility of damage to preforms during the infiltration process. The resin-melt feed lines may conveniently end in retractable nozzle tips, which are configured to be compatible with the external openings (for instance, sprue bushings) of melt supply channels in the mold apparatus of the present invention.

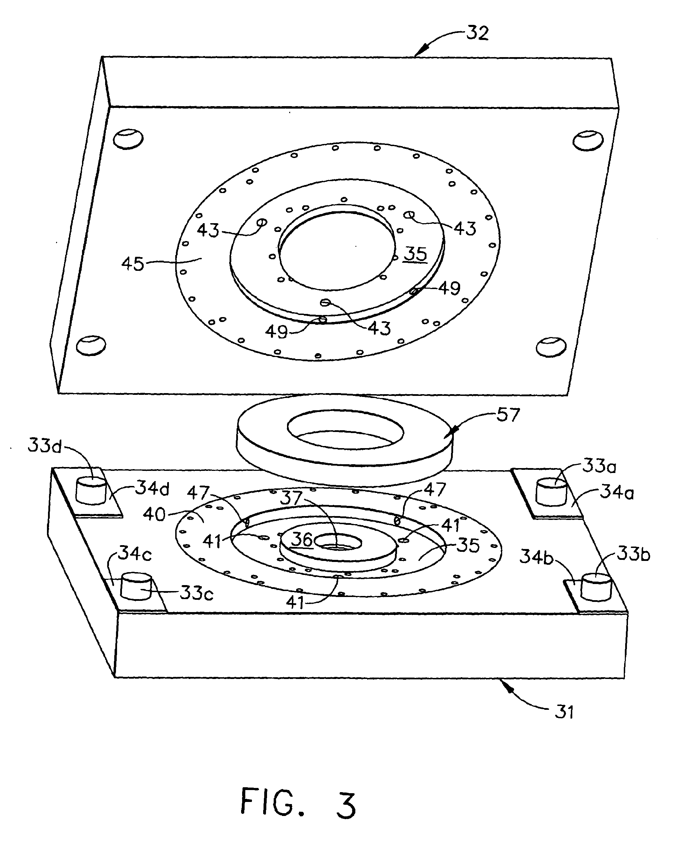

In accordance with this invention, venting may be performed through the mold surfaces. Figure 3 is a view of the top half 32 and bottom half 31 of a single chambered, annular mold of an embodiment of the present invention. Preform 57 is shown positioned between the upper and lower halves of the mold. The bottom half of the mold has guide pins 33a, 33b, 33c, and 33d to facilitate the alignment of the top and bottom halves of the mold. Bottom mold half 31 contains bottom mold insert 40. Top mold half 32 contains top mold insert 45. Mold inserts 40 and 45, when joined together face-to-face, define central mold cavity 35. Mold cavity 35 has a gate 36 and a nozzle 37 for injection of the pitch or resin into the inside of the preform. Mold cavity 35 also has runners 41 (lower) and 43 (upper) for injection of the pitch or resin into the bottom of the preform. Finally, mold cavity 35 has runners 47 (lower) and 49 (upper) for injection of the pitch or resin into the outside of the preform. Shim stock 34a, 34b, 34c, and 34d enables even venting of atmosphere and volatiles from the mold cavity. The shim stock can have a thickness of 0.005 inches to 0.200 inches (0.13 mm to 5.1 mm). Alternatively, permanent spacers or machined grooves in the mold may be used to provide venting. Venting is normally performed during the injection of resin into the mold. Alternatively, vacuum can be provided to the mold prior to resin injection. A vacuum can also be provided to the mold during resin injection, in which case vent spacers would not be employed.

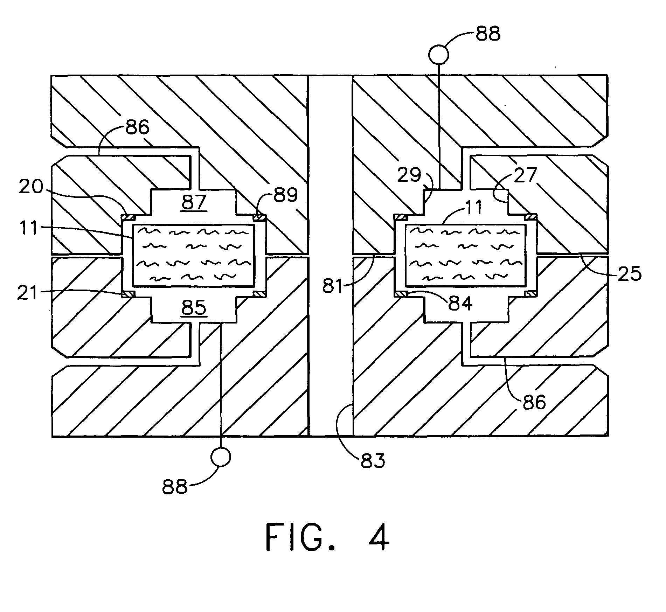

Figure 4 is a cross-section of a mold insert assembly according to one embodiment of the present invention. In Figure 4, the upper and lower mold insert halves join together to form a mold cavity that comprises upper mold cavity 87 and lower mold cavity 85. Pressure indicator 88 provides real-time readings of the pressure in the mold cavity. The mold cavity formed by the joined top and bottom halves is partially defined by upper and lower inner locator rings 84 and 89 and upper and lower outside diameter locator rings 20 and 21 and by inner step ring 29 and by outer step ring 27. Significant features of the mold of this invention include inner vent 81, which vents gasses into cylindrical center vent port 83, and annular outer vent 25, which vents flash (small amounts of excess pitch or resin) into annularly disposed recovery channels. Another, very significant feature of the mold of this invention is melt supply channels 86, which are located above and below a preform 11 that is to be melt-infiltrated in the mold. Prior art molds generally supply melted pitch or resin into the mold cavity only from a centrally located gate.

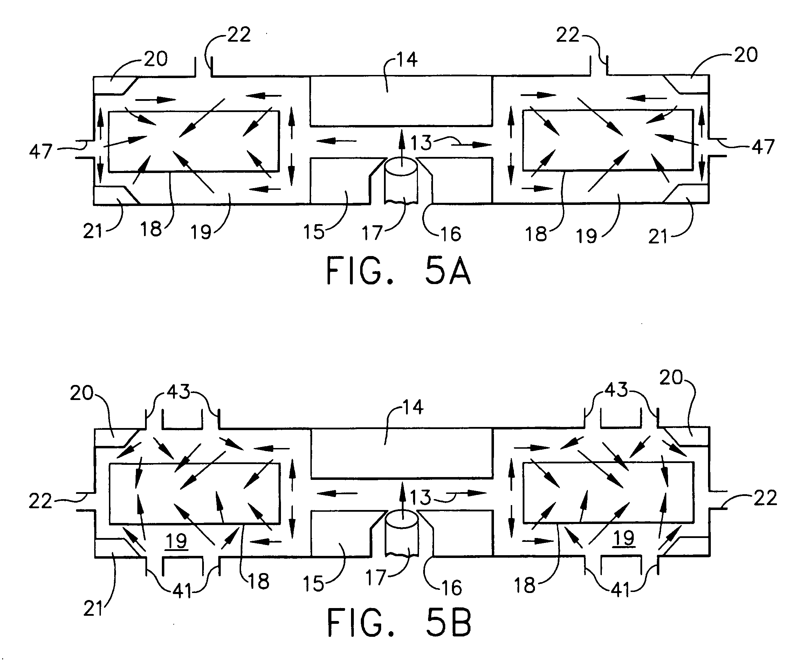

Figure 5A shows a cross-section of a mold insert according to one embodiment of the present invention. The annular ring preform 18 is placed in the annular chamber 19. The annular mold chamber 19 is center fed through gate 13, controlled by the top gate portion 14 and the bottom gate portion 15. Bottom gate portion 15 is fitted with a nozzle 16 having a shut off rod 17. Mold chamber 19 is also fed with resin or pitch through outside runners 47. The annular chamber 19 is fitted with two outside diameter locator rings 20 and 21. Each of the OD rings has an overlap of approximately 6.35 mm to 12.7 mm (¼ to ½ inch) with the preform. The vents 22 eliminate trapped air, volatile gases, and excess resin.

Figure 5B shows a cross-section of a mold insert according to another embodiment of the present invention. The annular ring preform 18 is placed in the annular chamber 19. The annular mold chamber 19 is center fed through gate 13, controlled by the top gate portion 14 and the bottom gate portion 15. Bottom gate portion 15 is fitted with a nozzle 16 having a shut off rod 17. Mold chamber 19 is also fed with resin or pitch through top runners 43 and through bottom runners 41. The annular chamber 19 is fitted with two outside diameter locator rings 20 and 21. Each of the OD rings has an overlap of approximately 6.35 mm to 12.7 mm (¼ to ½ inch) with the preform. The vents 22 eliminate trapped air, volatile gases, and excess resin.

As can be seen from the above disclosure, this invention provides for a wide range of infiltration time and pressure parameters. The mold apparatus described herein allows for the following versatility in infiltrating porous preforms or flat annular carbon brake disks: mold is top and bottom fed; mold is designed with hot runners and/or multiple nozzles to improve the versatility of infiltrating preforms with molten resin; mold and insert tooling vent to outside diameter (OD) and inside diameter (ID) simultaneously; mold insert tooling has protrusions or steps (top and bottom, ID and OD) to allow for gradient pressures over the top and bottom of the preform web, lessening the opportunity to damage parts during the pressurized infiltration process; melt pressure indicators (controls) at the top and bottom cavities; top fill only, bottom fill only, or top and bottom fill simultaneously; top and bottom fill with delay at top or bottom; ID to OD or OD to ID infiltration; ID to OD or OD to ID infiltration simultaneously or with delay to either side; flash cooling (air, water, mist, etc.) to improve cycle times or production rates; flash cooling to allow for hotter mold operating temperatures, enabling lower infiltration pressures and longer fill rates when desired; ID and/or OD preform locating rings to position the preform for infiltration; extended top and bottom ejector pins to serve as platforms during infiltration to prevent part flexing; mold can be used to infiltrate porous preforms with or without vacuum.

## Claims

1. A rapid resin or pitch transfer molding apparatus, which apparatus comprises:
(A.) means for melting and conveying a resin or pitch;
(B.) a mold arranged so that melted resin or pitch is conveyed from the melting and conveying means into an annular mold cavity (1, 35) **characterized in that** said annular mold cavity is situated within a removable insert (2) in the molding apparatus, wherein said removable mold insert comprises:
a top half that includes an annular groove (87);
a bottom half that includes an annular groove (85) opposed to the top half annular groove, so that the top half annular groove and the bottom half annular groove form an annular mold cavity (1, 35), said annular mold cavity optionally being partially defined by an inner step ring (29) and/or an inner locator ring (20, 21) and/or an outer step ring and/or an outer locator ring;
a plurality of melt supply channels (5, 6, 7, 8, 9, 86) disposed in the top half (31, 45) and in the bottom half (32, 40) of the mold, wherein said melt supply channels operatively communicate with said annular mold cavity;
valves (13, 36), wherein the valves can admit resin or pitch into the melt supply channels in the top half and the bottom half of the mold; and
an arrangement (22, 25, 81) for venting and/or providing a vacuum to the annular mold cavity, said arrangement optionally comprising a centrally located inner vent port (83) and a plurality of annularly located outer vent ports (22, 25); and
(C.) means disposed at the mold to constrain the mold during supply of the resin or pitch into the mold.

2. The rapid resin or pitch transfer molding apparatus of claim 1, wherein said removable mold insert is configured to produce a brake disc for an aircraft landing system.

3. A rapid resin or pitch transfer molding process, comprising the steps of:
arranging a porous fibrous preform (11, 18, 57), carbon fiber preform, nonwoven preform, random fiber preform with binder, rigidized preform, or foam preform at a temperature above a melting point of a resin or pitch to be transferred into the preform, in the annular mold cavity (1, 35) of the apparatus of claim 1;
effecting flow of the resin or pitch from channels (6, 7, 8, 9, 86) located in the top and bottom of the mold cavity through the preform (11, 18, 57) located in the mold cavity to vents (22, 25, 81) located in the center of, at the top and/or bottom of, and/or annularly around the mold cavity, in order to effect impregnation of the preform;
cooling the resulting resin-infiltrated or pitch-infiltrated preform to below the melting point of the resin or pitch; and
removing the impregnated preform from the mold.

4. The rapid resin or pitch transfer molding process according to claim 3, wherein the preform is heated to a temperature in the range of about 100 through about 425 °C.

5. The resin transfer molding process according to claim 3, which further comprises carbonization of the oxidized impregnated preform, heating to a temperature in the range of about 1600°C through about 2800°C to graphitize the carbonized impregnated preform, and further densifying the graphitized preform using chemical vapor deposition/chemical vapor infiltration or resin transfer molding.

6. The rapid resin or pitch transfer molding process according to claim 3, wherein a vacuum is provided to the mold prior to injecting the molten resin or pitch.

7. The rapid resin or pitch transfer molding process according to claim 3, wherein cooling of the resulting resin-infiltrated or pitch-infiltrated preform is effected by a flash cooling system.

## Patentansprüche

1. Gießapparatur zur schnellen Überführung von Harz oder Pech, wobei die Apparatur umfasst:
(A) Mittel zum Schmelzen und Befördern eines Harzes oder Pechs;
(B) eine Gussform, die derart angeordnet ist, dass geschmolzenes Harz oder Pech vom Schmelz- und Beförderungsmittel in einen ringförmigen Gussformhohlraum (1, 35) befördert wird, **dadurch gekennzeichnet, dass** sich der ringförmige Gussformhohlraum innerhalb eines austauschbaren Einsatzes (2) in der Gießapparatur befindet, wobei der austauschbare Gussformeinsatz umfasst:
eine obere Hälfte, die eine ringförmige Nut (87) einschließt;
eine untere Hälfte, die eine ringförmigen Nut (85) einschließt, die der ringförmigen Nut der oberen Hälfte gegenüberliegt, sodass die ringförmige Nut der oberen Hälfte und die ringförmige Nut der unteren Hälfte einen ringförmigen Gusshohlraum (1, 35) bilden, wobei der ringförmige Gusshohlraum wahlweise teilweise durch einen inneren Stufenring (29) und/oder einen inneren Zentrierring (20, 21) und/oder einen äußeren Stufenring und/oder einen äußeren Zentrierring definiert ist;
eine Vielzahl an in der oberen Hälfte (31, 45) und in der unteren Hälfte (32, 40) der Gussform angeordnete Schmelzezuführungskanäle (5, 6, 7, 8, 9, 86), wobei die Schmelzezuführungskanäle funktionsfähig mit dem ringförmigen Gusshohlraum kommunizieren;
Ventile (13, 36), wobei die Ventile Harz oder Pech in die Schmelzezuführungskanäle in der oberen Hälfte und der unteren Hälfte der Gussform zulassen können; und
eine Anordnung (22, 25, 81) zum Belüften und/oder Bereitstellen eines Vakuums für den ringförmigen Gusshohlraum, wobei die Anordnung wahlweise eine mittig lokalisierte Ventilmündung (83) und eine Vielzahl an ringförmig lokalisierten äußeren Ventilöffnungen (22, 25) umfasst; und
(C) an der Gussform angeordnete Mittel, um die Gussform während der Zuführung des Harzes oder Pechs in die Gussform einzuspannen.

2. Gießapparatur zur schnellen Überführung von Harz oder Pech nach Anspruch 1, wobei der austauschbare Gusseinsatz zum Herstellen einer Bremsscheibe für ein Flugzeuglandesystem konfiguriert ist.

3. Gießverfahren zur schnellen Überführung von Harz oder Pech, umfassend die Schritte:
Anordnen einer porösen faserartigen Vorform (11, 18, 57), Kohlefaservorform, Gewebevorform, Vorform aus statistischen Fasern mit Bindemittel, versteiften Vorform oder Schaumvorform bei einer Temperatur über dem Schmelzpunkt eines in die Vorform zu überführenden Harzes oder Pechs, im ringförmigen Gusshohlraum (1, 35) der Apparatur von Anspruch 1;
Bewirken des Flusses des Harzes oder Pechs von den sich in der Oberseite und dem Boden des Gusshohlraums befindlichen Kanälen (6, 7, 8, 9, 86) durch die sich im Gusshohlraum befindliche Vorform (11, 18, 57) zu Entlüftungen (22, 25, 81), die in der Mitte von, an der Oberseite und/oder dem Boden von, und/oder ringförmig um den Gusshohlraum lokalisiert sind, um die Tränkung der Vorform zu bewirken;
Abkühlen der resultierenden harzdurchsickerten oder pechdurchsickerten Vorform unter den Schmelzpunkt des Harzes oder Pechs; und
Entfernen der durchsickerten Vorform aus der Gussform.

4. Gießverfahren zur schnellen Überführung von Harz oder Pech nach Anspruch 3, wobei die Vorform auf eine Temperatur im Bereich von etwa 100 bis etwa 425 °C erwärmt wird.

5. Gießverfahren zur Überführung von Harz nach Anspruch 3, das des Weiteren die Carbonisation der oxidierten getränkten Vorform, Erwärmen auf eine Temperatur im Bereich von etwa 1600 °C bis etwa 2800 °C zum Graphitisieren der carbonisierten getränkten Vorform und des Weiteren Verdichten der graphitisierten Vorform unter Verwendung von chemischer Dampfabscheidung/chemischer Dampfdurchsickerung oder Harzüberführungsgießen, umfasst.

6. Gießverfahren zur schnellen Überführung von Harz oder Pech nach Anspruch 3, wobei der Gussform vor dem Einspritzen des geschmolzenen Harzes oder Pechs ein Vakuum bereitgestellt wird.

7. Gießverfahren zur schnellen Überführung von Harz oder Pech nach Anspruch 3, wobei das Abkühlen der erhaltenen harzdurchsickerten oder pechdurchsickerten Vorform durch ein Blitzkühlsystem bewirkt wird.

## Revendications

1. Appareil de moulage rapide de résine ou de brai par transfert, lequel appareil comprend :
(A.) des moyens de fusion et de transport d'une résine ou d'un brai,
(B.) un moule agencé de telle sorte que la résine ou le brai fondus sont transportés des moyens de fusion et de transport jusque dans une cavité annulaire de moule (1, 35), **caractérisé en ce que** ladite cavité annulaire de moule est située à l'intérieur d'une garniture amovible (2) prévue dans l'appareil de moulage, ladite garniture amovible de moule comprenant :
une moitié supérieure qui contient une rainure annulaire (87),
une moitié inférieure qui contient une rainure annulaire (85) située face à la rainure annulaire de la moitié supérieure de telle sorte que la rainure annulaire de la moitié supérieure et la rainure annulaire de la moitié inférieure forment une cavité annulaire de moule (1, 35), ladite cavité annulaire de moule étant facultativement définie en partie par un épaulement annulaire intérieur (29) et/ou par une bague intérieure de positionnement (20, 21) et/ou par un épaulement annulaire extérieur et/ou par une bague extérieure de positionnement,
plusieurs canaux (5, 6, 7, 8, 9, 86) d'alimentation en matière fondue disposés dans la moitié supérieure (31, 45) et dans la moitié inférieure (32, 40) du moule, lesdits canaux d'alimentation en matière fondue étant en communication fonctionnelle avec ladite cavité annulaire de moule,
des soupapes (13, 36) qui permettent de faire entrer la résine ou le brai dans les canaux d'alimentation en matière fondue de la moitié supérieure et de la moitié inférieure du moule et
un agencement (22, 25, 81) d'évent et/ou d'application d'une dépression dans la cavité annulaire de moule, ledit agencement comprenant facultativement un orifice intérieur d'évent (83) situé au centre et plusieurs orifices extérieurs d'évent (22, 25) disposés en anneau et
(C.) des moyens disposés sur le moule pour serrer le moule pendant l'admission de la résine ou du brai dans le moule.

2. Appareil de moulage rapide de résine ou de brai par transfert selon la revendication 1, dans lequel ladite garniture amovible de moule est configurée de manière à produire un disque de frein pour un système d'atterrissage d'aéronef.

3. Procédé de moulage rapide de résine ou de brai par transfert, qui comprend les étapes qui consistent à :
placer dans la cavité annulaire de moule (1, 35) de l'appareil selon la revendication 1 une ébauche fibreuse poreuse (11, 18, 57), une ébauche en fibres de carbone, une ébauche non tissée, une ébauche en fibres disposées aléatoirement et dotée d'un liant, une ébauche rigidifiée ou une ébauche en mousse à une température supérieure au point de fusion de la résine ou du brai à transférer dans l'ébauche,
faire s'écouler la résine ou le brai depuis des canaux (6, 7, 8, 9, 86) situés au sommet et à la base de la cavité de moule à travers l'ébauche (11, 18, 57) située dans la cavité de moule et jusqu'à des évents (22, 25, 81) situés au centre, au sommet et/ou à la base de la cavité de moule et/ou en un anneau autour de la cavité de moule, pour imprégner l'ébauche,
refroidir l'ébauche imprégnée de résine ou imprégnée de brai ainsi obtenue jusqu'en dessous du point de fusion de la résine ou du brai et
enlever l'ébauche imprégnée du moule.

4. Procédé de moulage rapide de résine ou de brai par transfert selon la revendication 3, dans lequel l'ébauche est chauffée à une température comprise dans la plage d'environ 100 à environ 425°C.

5. Procédé de moulage de résine par transfert selon la revendication 3, qui comprend en outre la carbonisation de l'ébauche imprégnée oxydée, par chauffage à une température comprise dans la plage d'environ 1 600°C jusqu'à environ 2 800°C pour graphiter l'ébauche imprégnée et carbonisée et encore densifier davantage l'ébauche graphitée en utilisant un dépôt chimique de vapeur et/ou une infiltration chimique de vapeur ou un moulage de résine par transfert.

6. Procédé de moulage rapide de résine ou de brai par transfert selon la revendication 3, dans lequel une dépression est appliquée au moule avant l'injection de la résine ou du brai à l'état fondu.

7. Procédé de moulage rapide de résine ou de brai par transfert selon la revendication 3, dans lequel le refroidissement de l'ébauche imprégnée de résine ou imprégnée de brai obtenu est réalisé par un système de refroidissement brusque.
